# EUROPEAN PATENT APPLICATION

(11) **EP 4 773 136 A1**
(43) Date of publication of application: **08.07.2026**
(21) Application number: 26150087.0
(22) Date of filing: 02.01.2026
(51) Int. Cl.: G10L 15/22, G10L 15/25, G06V 10/82, G06V 20/59, G06V 40/16, G10L 15/06, G10L 17/00, G10L 25/78

(54) **VOICE RECOGNITION AUGMENTATION USING OCCUPANT MONITORING SYSTEMS**

(30) Priority: 06.01.2025 US 202563742262 P; 30.12.2025 US 202519436589
(71) Applicant: Harman Becker Automotive Systems, Inc., Novi, MI 48377 (US)
(72) Inventor: CHEN, Zhijun, Novi, MI, 48377 (US); GANDHI, Kaustubh Ashok, Novi, MI, 48377 (US); NALLAIAH, Saravanakumar, Novi, MI, 48377 (US); STROEBELE, Robert, Novi, MI, 48377 (US)
(74) Representative: Rummler, Felix

(57) **Abstract**

In various embodiments, a method includes receiving an audio signal from a microphone system associated with a vehicle, receiving a video signal from a camera system associated with the vehicle, identify a facial classification model for classifying one or more facial makers in the video signal, determining that an occupant of the vehicle is speaking using the facial classification model, and generating an isolated audio signal corresponding to a speech signal in the audio signal using the facial classification model.

## Description

### CROSS-REFERENCE TO RELATED APPLICATIONS

This application claims priority benefit of United States Provisional Patent Application titled, "VOICE RECOGNITION AUGMENTATION USING DRIVER MONITORING SYSTEMS, OCCUPANT MONITORING SYSTEMS AND LIP-READING SYSTEMS," filed January 6, 2025 and having serial number 63/742,262. The contents of this application are hereby incorporated by reference herein in its entirety.

### BACKGROUND

### Field of the Various Embodiments

This application is directed to computing devices and, more specifically, to voice recognition augmentation using occupant monitoring systems and driver monitoring systems.

### Description of the Related Art

Virtual personal assistants (or "VPAs") have recently increased in popularity. In particular, vehicles equipped with VPA capability have become a common application of such assistants. Inside of a vehicle, an occupant can speak to the VPA through a microphone to perform a task such as playing media, placing a phone call, or providing navigation instructions to the occupant. The VPA performs voice recognition on the speech made by the vehicle occupant to identify keywords and respond to the identified keywords by performing the operation indicated by the occupant.

One drawback with conventional VPAs, however, is that the VPA often has difficulty processing the speech made by the vehicle occupant in non-ideal environments. For example, the conventional VPA is typically trained to identify words based on speech of a single speaker speaking clearly into a microphone. However, vehicles often have more than one occupant. For example, a vehicle may have a passenger seated next to the driver who is speaking, consuming media, or otherwise creating vocal signals that can interfere with an audio signal of the driver speaking into a microphone system of a vehicle. Additionally, in a vehicle environment, there can be many other sounds that are captured by the microphone system of the vehicle. For example, road noise, wind noise, or sounds caused by elements outside of the vehicle can be captured by the vehicle microphone system in addition to speech signals from an occupant attempting to speak to the VPA within the vehicle. As a result, the VPA cannot accurately determine which vocal signals are providing the keywords to indicate a desired operation, degrading performance of the VPA through inaccurate responses. Some conventional VPAs can include user-based training that includes training a speech recognition model for individual users of the VPA, including the occupants of the vehicle. However, if the VPA has been trained on more than one occupant of the vehicle, the VPA may not apply the correct trained data for a desired occupant.

As the foregoing illustrates, what is needed in the art are more effective techniques for interacting with virtual personal assistants.

### SUMMARY

In various embodiments, a computer-implemented method includes an audio signal from a microphone system associated with a vehicle, receiving a video signal from a camera system associated with the vehicle, identify a facial classification model for classifying one or more facial makers in the video signal, determining that an occupant of the vehicle is speaking using the facial classification model, and generating an isolated audio signal corresponding to a speech signal in the audio signal using the facial classification model. Embodiments further include a non-transitory computer readable medium and one or more systems.

At least one technical advantage of the disclosed techniques relative to the prior art is that, with the disclosed techniques, a Virtual Personal Assistant (VPA) can isolate speech of a particular occupant and process the commands of said occupant with improved accuracy. In particular, by incorporating both a vocal recognition model and facial recognition model to obtain spoken commands from an occupant of a vehicle, the VPA can more accurately determine when an occupant of the vehicle is speaking and more accurately process vocal signals from the occupant by isolating speech of the occupant and utilizing a trained machine learning model. Using the isolated speech and a model that is trained to identify a particular occupant or speaker, the performance of the VPA is more reliable and accurate.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 ilustrates a block diagram of a voice and facial recognition system configured to implement one or more aspects of the present disclosure
Figure 2 illustrates a scenario in which video is obtained using one or more cameras to generate a trained facial recognition model;
Figure 3 illustrates an operation in which a vocal recognition application can generate a trained vocal recognition model;
Figure 4 illustrates a vocal recognition module generating an isolated audio signal from a video signal and an audio signal; and
Figure 5 is a flow diagram of method steps for processing audio with a voice and facial recognition system.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

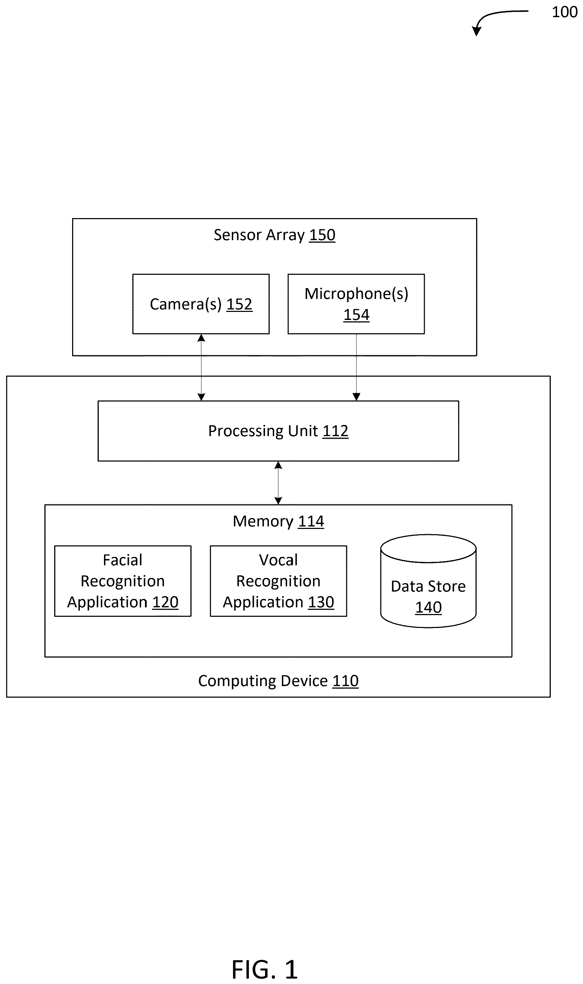

Figure 1 illustrates a block diagram of a voice and facial recognition system 100 configured to implement one or more aspects of the present disclosure. As shown, the voice and facial recognition system 100 includes, without limitation, a sensor array 150, and a computing device 110. The computing device 110 includes, without limitation, a memory 114. The memory 114 includes, without limitation, a facial recognition application 120, a vocal recognition application 130, and a data store 140. The sensor array 150 includes, without limitation, one or more cameras 152 and one or more microphones 154.

In operation, the computing device 110 receives sensor data from the sensor array 150. The sensor data includes image and/or video data of an occupant of a vehicle associated with the facial and vocal recognition system 100. The sensor data includes audio data, including an audio signal generated from speech captured by the one or microphones 154. The processing unit 112 executes the facial recognition application 120 and the vocal recognition application 130 to determine if the occupant is speaking and, if so, synchronize an audio signal captured by the microphone 154 with a video signal captured by a camera 152. The processing unit 112 executes the facial recognition application 120 to determine if the occupant is speaking in a video signal. In some embodiments, the facial recognition application 120 includes a Machine Learning (ML) model that is used to analyze the video signal associated with one or more occupants that is captured by the camera 152. If the facial recognition application 120 determines that an occupant is speaking, then the processing unit 112 executes the vocal recognition application 130 to annotate an audio signal captured by the microphone 154 with timestamps of the speaking occupant. The timestamps identified when in the audio signal that the occupant is speaking. For example, a first timestamp can identify when a user begins speaking, and a second timestamp identifies when the user ceases speaking. Then, a third timestamp can identify when the user resumes speaking, and so on. With an annotated audio signal, the facial and vocal recognition system 100 can isolate voice of the speaking occupant from the audio signal to generate an isolated audio signal. The isolated audio signal can then be used by another device or system such as speech-to-text, Virtual Personal Assistants (VPA), and/or the like.

As noted above, computing device 110 can include the processing unit 112 and the memory 114. The computing device 110 can be a device that includes one or more processing units 112, such as a system-on-a-chip (SoC). In various embodiments, computing device 110 can be a mobile computing device, such as a tablet computer, mobile phone, media player, and so forth. In some embodiments, the computing device 110 can be a head unit included in a vehicle system. Generally, the computing device 110 can be configured to coordinate the overall operation of the voice recognition system 100. The embodiments disclosed herein contemplate any technically feasible system configured to implement the functionality of the voice recognition system 100 via computing device 110.

Various examples of the computing device 110 include mobile devices (e.g., cellphones, tablets, laptops, etc.), wearable devices (e.g., watches, rings, bracelets, headphones, etc.), consumer products (e.g., gaming, gambling, etc.), smart home devices (e.g., smart lighting systems, security systems, digital assistants, etc.), communications systems (e.g., conference call systems, video conferencing systems, etc.), cockpit domain controllers (CDCs), high-performance compute (HPC) units, zonal electronic control units (ECUs), and so forth. The computing device 110 can be located in various environments including, without limitation, road vehicle environments (e.g., consumer car, commercial truck, etc.), aerospace and/or aeronautical environments (e.g., airplanes, helicopters, spaceships, etc.), nautical and submarine environments, and so forth. Accordingly, the computing device 110 can execute the facial recognition application 120 and the vocal recognition application 130 to process a wide range of vocal signal and/or video signals. For example, the computing device 110 can be included in a smart home device to process the speech of a user in a room of a house.

The processing unit 112 can include a central processing unit (CPU), a digital signal processing unit (DSP), a microprocessor, an application-specific integrated circuit (ASIC), a neural processing unit (NPU), a graphics processing unit (GPU), a field-programmable gate array (FPGA), and so forth. The processing unit 112 generally comprises a programmable processor that executes program instructions to manipulate input data. In some embodiments, the processing unit 112 can include any number of processing cores, memories, and other modules for facilitating program execution.

The memory 114 can include a memory module or collection of memory modules. The memory 114 generally comprises storage chips such as random-access memory (RAM) chips that store application programs and data for processing by the processing unit 112. In various embodiments, the memory 114 can include non-volatile memory, such as optical drives, magnetic drives, flash drives, or other storage. In some embodiments, separate data stores, such as a data store (not shown) accessed over a network ("cloud storage") can supplement the memory 114. In some embodiments, one or more services or modules, such as one or more trained machine learning (ML) models and/or lookup tables, are stored in the data store 140.

The one or more cameras 152 can be included with a vehicle and positioned throughout the cabin of a vehicle to monitor one or more occupants. Such cameras can include RGB cameras, infrared cameras, depth cameras, and/or camera arrays, which include two or more of such cameras. The one or more cameras 152 can be positioned to monitor the occupants while seated in the cabin of the vehicle, to monitor the outside environment around the vehicle, and/or the like.

The one or more microphones 154 can be included with a vehicle and positioned throughout the cabin of said vehicle to monitor one or more occupants. The microphones 154 can be included in an array of multiple microphones. The microphones 154 can be positioned to capture audio signals of the one or more occupants. The audio of the microphones 154 can be processed by systems not included in the present embodiments, such as operation of a smartphone device, emergency systems, and/or the like.

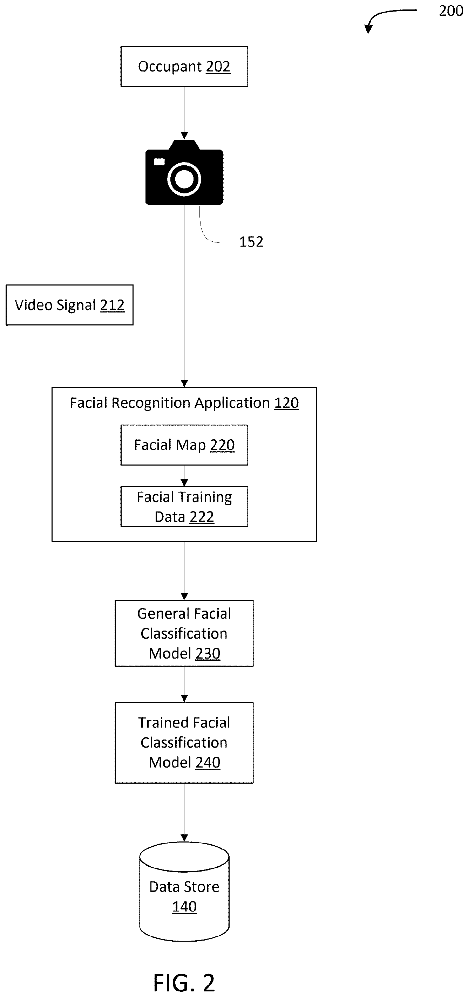

Figure 2 illustrates a scenario 200 in which video is obtained using one or more cameras 152 of the sensor array 150 in which a trained facial classification model 240 using the facial recognition application 120. As shown, the depicted scenario 200 includes, without limitation, an occupant 202, a camera 152, a video signal 212, the facial recognition application 120, a general facial classification model 230, a trained facial classification model 240, and the data store 140. The facial recognition application includes, without limitation, a facial map 220 and a facial training data 222.

In operation, the facial recognition application 120 receives and/or retrieves a video signal 212 that the camera 152 acquires. The facial recognition application 120 receives a video signal 212 of the occupant 202 facing the camera 152 while speaking to generate a facial map 220 of the occupant 202. The facial map 220 can include landmarks of the face of the occupant 202, such as cheek bone height, jaw position, lip position, and/or the like while speaking. Using the facial map 220 of the occupant 202, the facial recognition application 120 generates facial training data 222 that can be used to train a general facial classification model 230 to create a trained facial classification model 240. The general facial classification model 230 can be a Machine Learning (ML) model, such as a Convolutional Neural Network (CNN), that determines whether the occupant 202 in front of a sensor array 150 is speaking. By applying the facial training data 222 of the occupant to such a general facial classification model 230, the trained facial classification model 240 can accurately determine if the face of the occupant 202 indicates that the occupant is speaking.

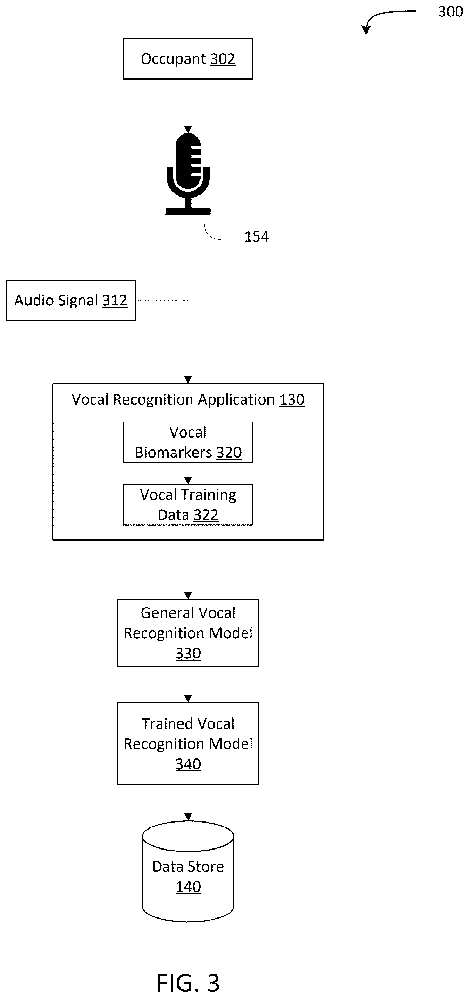

In various embodiments, the facial recognition application 120 trains a machine learning model to detect whether a human in an environment is speaking. In some embodiments, the facial recognition application 120 is separate from the vehicle and is retrieved from a remote computing device, such as a remote server in a data center, over a network. In such instances, the facial recognition application 120 can train the trained facial classification model 240 prior to use in a vehicle (e.g., prior to manufacturing the vehicle). The trained facial classification model 240 can then be stored in a remote computing device and such remote computing device can subsequently transmit the trained facial classification model 240 to the computing device 110 for later use. Alternatively, in some embodiments, the facial recognition application 120 is included in a vehicle and acquires the video signal 212 when an occupant initiates an operation 200. For example, when a vehicle occupant operates the vehicle for an initial drive, the vehicle occupant can initiate calibration or training of a trained facial classification model 240 to have the facial recognition application 120 generate a facial map 220 for use in calibrating general facial classification model 230. As discussed further in relation to Figure 3, in some embodiments, the vocal recognition application 130 can also engage during said facial recognition application 120 operation to analyze the voice of the occupant.

The facial recognition application 120 generates a facial map 220 of the occupant 202 based on the video signal 212 transmitted from the camera 152. In various embodiments, the facial map 220 includes positions of the lips, jaw, cheek bones, or other facial features in various positions during speech. From the features of the face of the occupant 202, the facial recognition application 120 can determine if the facial map 220 can be used to create the facial training data 222. For example, if the occupant 202 in video signal 212 is obscured, then facial recognition application 120 can determine that the signal to noise ratio of the facial map 220 is low and forego generating the facial training data 222. Where facial recognition application 120 determines that facial map 220 is of sufficient quality, the facial training data 222 is generated based on the video signal 212 and provided as input to a training process for general facial classification model 230. The facial training data 222 can include labeled data of the occupant 202 both speaking and silent. As discussed further in relation to Figure 3, in some embodiments, the facial training data 222 can be labelled based on a video signal 212 where the occupant 202 is speaking into a microphone 154.

The general facial classification model 230 is a classification ML model and/or a CNN that generates an output classifying an input based on one or more criteria. In various embodiments, the general facial classification model 230 is an ML model that is at least partially trained to process input images and output a classification based on the contents of the images. In such instances, the general facial classification model 230 can be previously trained using a separate dataset of images associated with humans in various positions while speaking or while silent. The general facial classification model 230 thus can have been previously trained to detect whether a human is present in an image and/or whether a human is speaking. In some embodiments, the general facial classification model 230 can be based on a CNN model that is capable of performing image recognition.

As shown, the facial training data 222 is provided to the general facial classification model 230 for calibrating the general facial classification model 230 to generate a trained facial classification model 240. The general facial classification model 230 is a classification model used to determine if a face is speaking. The general facial classification model 230 utilizes the facial training data 222 to modify the weights of the neural network of the model to accurately identify the occupant 202. A loss function is used to determine accuracy of the general facial classification model 230 accuracy on the facial training data 220 of the occupant 202, wherein successful predictions of the general facial classification model 230 are used to reinforce the model, and incorrect predictions weight the loss function against such predictions. The process of training the general facial classification model 230 with the facial training data 222 generates the trained facial classification model 240. In some embodiments, facial recognition application 120 can repeatedly input the facial training data 222 to the trained facial classification model 240 and tune with the loss function until reaching a threshold accuracy level. Upon a reaching the threshold accuracy level, the trained facial classification model 240 can be used to accurately determine if the occupant 202 is speaking. The trained facial classification model 240 can then be stored in the data store 140 of the computing device 110. The facial recognition application 120 can then use the facial map 220 to retrieve the trained facial classification model 240 trained for the occupant 202.

In various embodiments, the facial recognition application 120 generates a facial training data 222 for use in calibrating the general facial classification model 230 to create a trained facial classification model 240 for the occupant 202. For example, the facial recognition application 120 can store a video signal 212 of the occupant 202 associated with occupant 202 speaking without the occupant 202 initiating an operation 200. The video signal 212 can be stored in the data store 140 and retrieved by the facial recognition application 120. From the retrieved data, the facial recognition application 120 can determine that the signal to noise ratio of the video signal 212 reaches a predetermined threshold and can be used to generate the facial training data 222. The facial training data 222 can be generated from multiple instances of the occupant 202 interacting with the voice and facial recognition system 100.

Figure 3 illustrates an operation 300 showing how the vocal recognition application 130 can generate a trained vocal recognition model 340 using microphone 154 of the sensor array 150. As shown, the operation 300 includes, without limitation, an occupant 302, a microphone 154, an audio signal 312, the vocal recognition application 130, a general vocal recognition model 330, a trained vocal recognition model 340, and a data store 140. The vocal recognition application 130 includes, without limitation, one or more vocal biomarkers 320 and a vocal training data 322.

In operation, the vocal recognition application 130 receives and/or retrieves an audio signal 312 that the microphone 154 acquires. The vocal recognition application 130 receives the audio signal 312 of the occupant 302 speaking into the microphone 154. The audio signal 312 containing speech by the occupant 302 is used to generate one or more vocal biomarkers 320, which can be an audio signal of the voice of the occupant 302 with one or more identifiable audio patterns. The vocal biomarkers 320 can include, without limitation, pitch, rhythm, timbre, tone, and/or the like of the occupant 302. Using the vocal biomarkers 320, the vocal recognition application 130 generates a vocal training data 322 specific to the occupant 302 that can be used to calibrate the general vocal recognition model 330 to the occupant 302 to create a trained vocal recognition model 340. The general vocal recognition model 330 can be an artificial intelligence (AI) model, such as OpenAI Whisper, that labels an audio signal 312 with timestamps matching the occupant 302 matching the desired audio patterns (e.g., the vocal biomarkers of the vocal biomarkers 320).

In various embodiments, the vocal recognition application 130 trains a machine learning model to label the occurrence of the vocal biomarkers of the 302 from the audio signals 312 that can include, without limitation, background noise and/or other speech in the signal. In some embodiments, the vocal recognition application 130 is separate from the vehicle and is retrieved from a remote computing device, such as a remote server in a data center, over a network. In such instances, the vocal recognition application 130 can train the trained vocal recognition model 340 prior to use in a vehicle (e.g., prior to manufacturing the vehicle and/or the like. The trained vocal recognition model 340 can then be stored in a remote computing device and such remote computing device can subsequently transmit the trained vocal recognition model 340 to a computing device 110 for later use.

Alternatively, in some embodiments, the vocal recognition application 130 is included in a vehicle and acquires the audio signal 312 when an occupant initiates a calibration operation (e.g., the operation 300). For example, when a vehicle occupant first operates the vehicle for initial travel, the vehicle occupant can initiate an operation 300 to have the vocal recognition application 130 generate the vocal biomarkers 320 for use in calibrating the general vocal recognition model 330.

In various embodiments, the vocal recognition application 130 generates the vocal biomarkers 320 of the occupant 302 based on the audio signal 312 transmitted from the microphone 154. From the vocal biomarkers 320, the vocal recognition application 130 can determine if the audio signal 312 can be used to generate a vocal training data 322. Where the audio signal 312 contains other sources of noise, such as road noise, engine noise, other voices, and/or the like, the signal to noise ratio of the audio signal 312 can be too low to generate the vocal training data 322. If the audio signal 312 has a signal to noise ratio of a predetermined threshold, the vocal recognition application 130 can then use the audio 312 to generate the vocal training data 322.

The general vocal recognition model 330 is an artificial intelligence model that generates one or more labels, such as timestamps, on an audio signal. In various embodiments, the general vocal recognition model 330 is an AI model that is at least partially trained to process audio signals and output a label on said audio signals. In such instances, the general vocal recognition model 330 can be previously trained using a separate dataset of audio signals associated with human speech. The general vocal recognition model 330 thus can have been previously trained to detect human speech in audio signals with various other sources of noise, such as engine noise, road noise, and/or the like.

As shown, vocal training data 322 is provided to the general vocal recognition model 330 for calibration of the general vocal recognition model 330 to generate a trained vocal recognition model 340. The general vocal recognition model 330 uses the vocal training data 322 320 of the occupant 302 to calibrate the model to the vocal to more accurately label audio signals containing the voice of the occupant 302. A loss function is used to determine the general vocal recognition model 330 accuracy on the vocal biomarkers 320 of the occupant 302, wherein successful predictions used to reinforce the general vocal recognition model 330, and incorrect predictions weight the general vocal recognition model against such predictions. In some embodiments, vocal recognition application 130 can repeatedly input the vocal training data 322 to the trained vocal recognition model 340 and tune with the loss function until reaching a threshold accuracy level. Upon reaching a threshold accuracy level, the generated trained vocal recognition model 340 can be used to label an audio signal (e.g., the audio signal 312) when the occupant 302 is speaking. The trained vocal recognition model 340 can be stored in the data store 140 for later retrieval. The vocal recognition application 130 can then use a facial map (e.g., the facial map 220) and/or the vocal biomarkers 320 to retrieve the trained vocal recognition model 340 trained for the occupant 302.

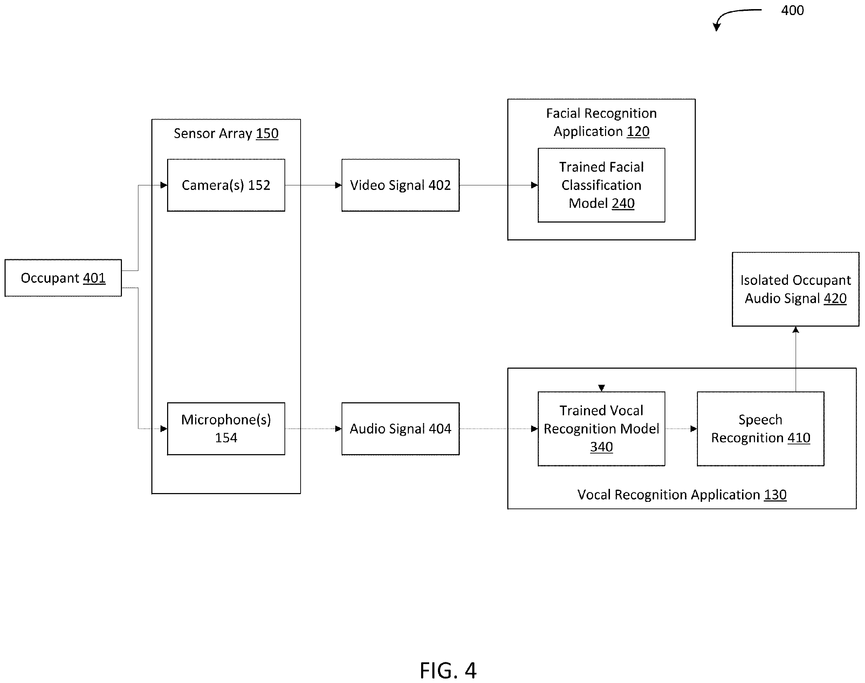

Figure 4 illustrates the vocal recognition application 130 of Figure 1 generating an isolated audio signal 420 from a video signal 402 and an audio signal 404 generated by a vehicle occupant 401. As shown, the scenario 400 depicted in Figure 4 includes, without limitation, an occupant 401, a sensor array 150, a video signal 402, an audio signal 404, an audio signal 404, a facial recognition application 120, a vocal recognition application 130, and a speech-isolated occupant audio signal 420. The facial recognition application 120 includes, without limitation, the trained facial classification model 240. The vocal recognition application 130 includes, without limitation, the trained occupant vocal recognition model 340.

In operation, the occupant 401 interacts with a sensor array 150 where the camera 210 captures a video signal 402 of the occupant 401 while the microphone 310 captures an audio signal 404. The video signal 402 is transmitted to the facial recognition application 120 where the trained facial classification model 240 can be used to identify the occupant 401 and determine whether the occupant 401 is speaking during the audio signal 404. The audio signal 404 is transmitted to the vocal recognition application 130 where the trained occupant vocal recognition model 340 is utilized to label the speech of the occupant 401 in the audio signal 404, where the trained occupant vocal recognition model 340 is trained on the vocal biomarkers of the occupant 401. Using both the video signal 402 and the trained facial classification model 240 indicates that the occupant 401 is speaking, the trained occupant vocal recognition model 340 can synchronize the facial movement of the occupant 401 in the video signal 402 with timestamps in the audio signal 404. A speech recognition application 410 receives the output of the trained occupant vocal recognition model 340 and generates a speech-isolated occupant audio signal 420.

In various embodiments, the camera 210 included in the sensor array 410 can acquire image data (e.g., a video signal) of the environment (e.g., the vehicle cabin). In such instances, the camera 210 can be configured to acquire image data of one or more humans within a specific environment. For example, the camera 210 is positioned within the vehicle cabin to capture the face of the occupant 401 when the occupant 401 is seated in a specific vehicle seat. In some embodiments, the camera 210 is included in a camera array of multiple cameras, where the camera array is configured to acquire images of multiple vehicle occupants (e.g., occupants seated in a row of vehicle seats). In such instances, the sensor array 410 acquires images of the multiple vehicle occupants 401 (e.g., 401(1), 401(2), etc.) via the camera array and the facial recognition application 120 separately processes image data of the respective vehicle occupants.

In various embodiments, the camera 210 inputs the video signal 402 into the trained facial classification model 240. The trained facial classification model 240 has been previously trained on the facial training data 222 of Figure 2, of the occupant 401 to generate the trained facial classification model 240. The classification output includes an indication of whether the subject of the image (e.g., the occupant 401) is speaking. The output of the trained facial classification model 240 is an input to the trained audio model 340 module which synchronizes the video signal 402 with the audio signal 404.

In various embodiments, the audio signal 404 is processed by the trained audio model 340 utilized by vocal recognition application 130 to identify the voice of the occupant 401 based on vocal biomarkers. Vocal biomarkers include, without limitation, pitch, rhythm, timbre, tone, and/or the like of the occupant 401. The trained audio model 340 has been previously trained on vocal data (e.g., the vocal training data 322) of the occupant 401 for use in isolating the voice of occupant 401 from other audio of the audio signal 404. The output of the trained audio model 340 includes predicted timestamps in the audio signal 404 synchronized with the video signal 402. The predicted timestamps identify when the occupant 401 is likely speaking in the audio signal 404. The trained audio model 340 can use the predicted timestamps and access portions of the audio signal 404 corresponding to the timestamps to validate whether the occupant 401 is speaking. In some embodiments, the trained audio model 340 can use the vocal biomarkers of a specific occupant 401 to isolate the voice of the occupant 401 from additional human voices (e.g., the occupant 401(2), the occupant 401(3)). Using this validation, the trained audio model 340 can annotate the voice of the occupant 401 in the audio signal 404.

In various embodiments, the speech recognition application 410 receives the output of the trained vocal recognition model 340 as an annotated audio signal. From an annotated audio signal, the speech recognition application 410 can generate a speech-isolated occupant audio signal 420. In some embodiments, the speech-isolated occupant audio signal 420 can be transmitted to additional systems for use (e.g., a VPA).

In some embodiments, the speech recognition application 410 is a machine learning model trained to isolate a human voice from environmental noise in the audio signal 404. Environmental noise can include, without limitation, road noise, engine noise, or operational noise. The speech recognition application 410 can be included with a vehicle and stored in the data store 140. Alternatively, the speech recognition application 410 can be retrieved from a remote computing device, such as a remote server in a data center, and stored in the data store 140 for use in the vocal recognition application 130.

In some embodiments, the general facial classification model 230 of Figure 2, is used to determine if the occupant 401 is speaking where a trained facial classification model 240 has not been generated by the occupant 401. For example, a facial map 220 can be generated from the occupant 401 and a general facial classification model 230 can be used to determine if the occupant 401 is speaking using data collected on a plurality of facial images. The output of the general facial classification model 230 can then be synchronized with the audio signal 404 to determine if the occupant 401 is speaking.

In some embodiments, the general vocal recognition model 330 is used to extract common vocal biomarkers from the audio signal 404. The general vocal recognition model 330 can be used to extract the voice of a subject speaking into the microphone 310 (e.g., the occupant 401) from background noise. In some embodiments, the general vocal recognition model 330 can be used to annotate the voices of two or more occupants from a common audio signal 404. The annotated audio signal 404 of one or more occupants 303 can be synchronized with the video signal 402 by the general vocal recognition model 330 to determine if the one or more occupants 401 are speaking.

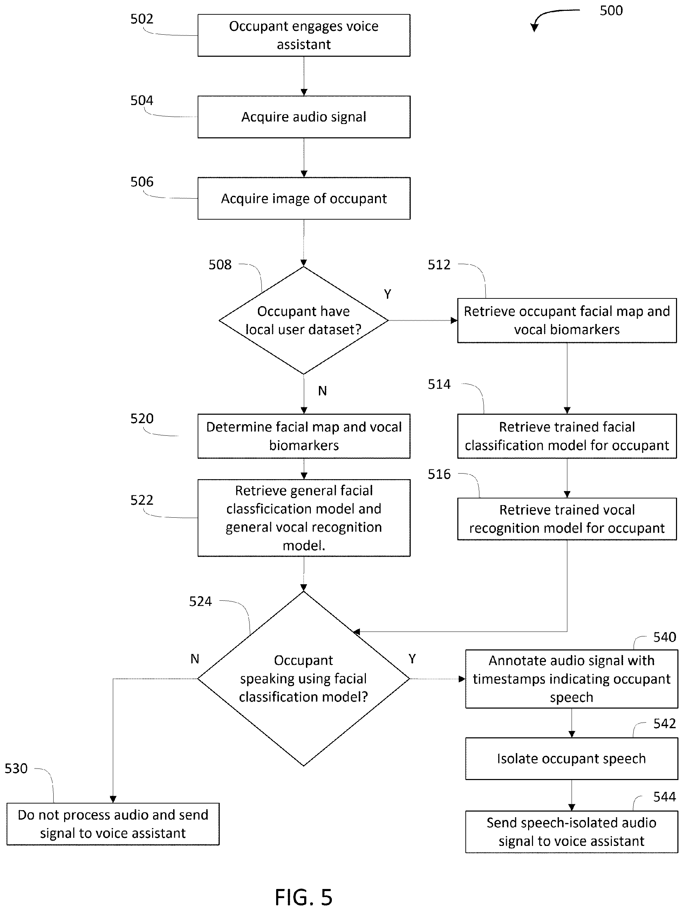

Figure 5 is a flow diagram of method steps for processing audio with augmentations from a facial recognition application and a vocal recognition application, according to various embodiments. Although the method steps are described with reference to the embodiments of Figures 1-4, persons skilled in the art will understand that any system configured to implement the method steps, in any order, falls within the scope of the present disclosure.

As shown, the method 500 begins at step 502, where the occupant engages a voice assistant. The voice assistant interacts with the facial and vocal recognition system 100. In one embodiment, an occupant engages the voice assistant by speaking a wakeword or speaking a request to the voice assistant that awakens the voice assistant. In various embodiments, the voice assistant, such as a Virtual Private Assistant (VPA), and the facial and vocal recognition system 100 is included in a vehicle.

At step 504, the facial and vocal recognition system 100 acquires an audio signal. In various embodiments, the audio signal (e.g., the audio signal 404) is captured through one or microphones 154 included in the sensor array 150. The audio signal 404 can include speech, such as the occupant 401 speaking into the microphone 154, background noise associated with operating a vehicle, other occupants of a vehicle, and/or similar background noise that interferes with processing the audio signal 404. In some embodiments, the sensor array 150 contains two or more microphones 154 which capture audio from multiple sources inside of the cabin of a vehicle. In such embodiments, the audio signal 404 from each of the two or more microphones 154 are processed together by the facial and vocal recognition system 100.

At step 506, the facial and vocal recognition system 100 acquires a video signal of the occupant. In various embodiments, the video signal (e.g., the video signal 402) is captured through one or more cameras 152 included in the sensor array 150. In some embodiments, the sensor array 150 contains two or more cameras 152 which capture video from multiple sources inside of the cabin, where the sensor array 150 is configured to acquire video of multiple vehicle occupants. In such embodiments, the facial and vocal recognition system 100 acquires video of the multiple vehicle occupants via the sensor array 150 and separately processes video data for the respective vehicle occupants.

At step 508, the facial and vocal recognition system 100 determines if a local user data set has been generated for the occupant 401. The facial and vocal recognition system 100 can map a facial map (e.g., the facial map 220) of the occupant 401 to one or more existing facial maps 220 to determine if a trained facial classification model 240 and/or a trained vocal recognition model 340 exists. In some embodiments, the facial and vocal recognition system 100 utilizes existing facial recognition systems included with the vehicle to determine if the trained facial classification model 240 and/or the vocal recognition model 340 exists. When the facial and vocal recognition system 100 determines that the trained facial classification model 240 and/or the vocal recognition model 340 has been trained and/or calibrated for the occupant 401, the facial and vocal recognition system 100 proceeds to step 512. Otherwise, the facial and vocal recognition system 100 determines that the trained facial classification model 240 and/or the vocal recognition model 340 have not been trained and/or calibrated for the occupant 401, the facial and vocal recognition system 100 proceeds to step 520.

At step 512, the facial and vocal recognition system 100 retrieves a facial map 220 and vocal biomarkers 320 for the occupant 401. In various embodiments, the facial map 220 and the vocal biomarkers 320 are retrieved from the data store 140. The facial map 220 can include landmarks of the face of the occupant 401, such as cheek bone height, jaw position, lip position, and/or the like while speaking. The vocal biomarkers 320 can include, without limitation, pitch, rhythm, timbre, tone, and/or the like of the occupant 401. In some embodiments, the facial map 220 and the vocal biomarkers 320 for multiple occupants are retrieved from the data store 140.

At step 514, the facial and vocal recognition system 100 retrieves a trained facial classification model 240 for the occupant 401. In various embodiments, the trained facial classification model 240 is a trained ML model, such as a CNN, trained and/or calibrated to detect speech for the occupant 401 in a video signal 402. Training the trained facial classification model 240 can include modifying the weights of a neural network. In such a process, a general facial classification model 230 is trained on the facial training data 222 until a threshold accuracy level is reached. Once the threshold accuracy level has been reached, the trained facial classification model 240 can be used to accurately predict when the occupant 401 is speaking in a video signal 402. In various embodiments, the trained facial classification model 240 is retrieved from the data store 140. In some embodiments, the facial and vocal recognition system 100 can retrieve a trained facial classification model 240 for two or more occupants 401, where such trained facial classification models 240 exist, to determine when the respective occupant 401 is speaking in one or more video signals 402.

At step 516, the facial and vocal recognition system 100 retrieves a trained vocal recognition model 340 for the occupant 401. In various embodiments, the trained vocal recognition model 340 is a trained ML or AI model that can annotate an audio signal 404 with timestamps indicating when the occupant 401 is speaking. Training the trained vocal recognition model 340 involves modifying the parameters of a general vocal recognition model 330 using the vocal training data 322 based on the vocal biomarkers 320 of the occupant 401. Once the trained vocal recognition model 340 reaches a threshold accuracy level, the trained vocal recognition model 340 can be used to accurately indicate when the occupant 401 is speaking in an audio signal 404. In various embodiments, the trained vocal recognition model 340 is retrieved from the data store 140. In some embodiments, a trained vocal recognition model 340 is retrieved for multiple occupants. In some embodiments, the facial and vocal recognition system 100 can retrieve a trained vocal recognition model 340 for two or more occupants 401, where such trained vocal recognition models 340 exist, to annotate the audio signal 404 with timestamps indicating the respective occupant 401 is speaking.

At step 520, the facial and vocal recognition system 100 generates a facial map 220 and vocal biomarkers 320 for the occupant 401. In some embodiments, the facial and vocal recognition system 100 generates the facial map 220 and one or more vocal biomarkers 320 from the video signal 402 and audio signal 404, respectively, where the occupant 401 does not have a trained facial classification model 240 or trained vocal recognition model 340.

At step 522, the facial and vocal recognition system 100 retrieves a general facial classification model 230 and/or a general vocal recognition model 330. The general facial classification model 230 and/or the general vocal recognition model 330 can be retrieved from a data store 140 included with the facial and vocal recognition system 100 or from a remote computing device. In some embodiments, the facial and vocal recognition system 100 retrieves the general facial classification model 230 and/or the general vocal recognition model 330 from a remote computing device over a network. In such embodiments, the remote computing device can be a server in a data center, a device such as a laptop, tablet, desktop, and/or the like that are separate from the vehicle.

At step 524, the facial and vocal recognition system 100 determines if the occupant 401 is speaking using the trained facial classification model 240 or the general facial classification model 230. The output of the trained facial classification model 240 or the general facial classification model 230 can include a binary classification indicating if the occupant 401 is speaking based on the facial map 220 of the occupant 401. In some embodiments, the facial and vocal recognition system 100 uses the trained facial classification model 240 trained for the occupant 401 to determine if the occupant 401 is speaking. The trained facial classification model 240 is a ML model that has trained on the facial training data 222 generated from the facial map 220 to accurately predict when the occupant 401 is speaking. In some embodiments, the facial and vocal recognition system 100 uses the general facial classification model 230 to determine if the occupant 401 is speaking. The general facial classification model 230 is a ML model that has trained on a dataset containing image and/or video data of one or more human faces to determine if a human face is moving during the course of speech. When the facial and vocal recognition system 100 determines that the occupant 401 is speaking, the facial and vocal recognition system 100 proceeds to step 540. When the facial and vocal recognition system 100 determines that the occupant 401 is not speaking, the facial and vocal recognition system 100 proceeds to step 530.

At step 530, the facial and vocal recognition system 100 does not process the audio signal 404 and sends the audio signal 404 to another system, such as a voice assistant etc. In some embodiments, the facial and vocal recognition system 100 cannot accurately determine if the occupant 401 is speaking using the trained facial classification model 240 and thus does not process audio using the trained vocal recognition model 340. In such embodiments, the unprocessed audio signal 404 is provided to a downstream system, such as a VPA, speech-to-text application, and/or the like.

At step 540, the facial and vocal recognition system 100 annotates the audio signal 404 with timestamps indicating occupant speech using the trained audio recognition model 340. The facial and vocal recognition system 100 determines, using the trained facial classification model 240, that the occupant 401 is speaking in the video signal 402 and uses the trained vocal recognition model 340 to annotate the audio signal 404 with timestamps indicating speech of the occupant 401. In some embodiments, the facial and vocal recognition system 100 uses the general vocal recognition model 330 to annotate the speech of the occupant 401 in an audio signal 404. The general vocal recognition model 330 is a general ML or AI model trained using a dataset of one or more humans speaking into a microphone to annotate an audio signal with timestamps indicating human speech. The facial and vocal recognition system 100 generates an annotated audio signal 404 and uses the general facial classification model 230 or trained facial classification model 240 to validate that the occupant 401 is speaking in a synchronized video signal 402 and audio signal 404.

At step 542, the facial and vocal recognition system 100 isolates the voice of the occupant 401 from the audio signal 404. In various embodiments, the facial and vocal recognition system 100 uses the speech recognition application 410 included in the vocal recognition application 130 to isolate the speech of the occupant 401 from other audio in the audio signal 404. The facial and vocal recognition system 100 uses the annotated audio signal 404 to generate the speech-isolated audio signal 420.

At step 544, the facial and vocal recognition system 100 provides the speech-isolated audio signal 420 to additional systems. In various embodiments, the speech-isolated audio signal 420 is provided to an additional system, such as a VPA, speech-to-text application, and/or the like include with the vehicle.

In sum, the disclosed techniques include voice recognition augmentation using driver monitoring systems. The disclosed techniques utilize a facial recognition application and a voice recognition application. The facial recognition application includes a facial classification ML model that is trained to process an input video and determine when an occupant is speaking and, in some cases, determine an identity of the speaking occupant. The vocal recognition application includes a trained vocal AI or ML model that annotates an audio signal captured by a microphone system with timestamps indicating human speech. The facial recognition application and the vocal recognition application can be implemented together to determine when an occupant of a vehicle is speaking and isolate the speech signals associated with the occupant from the audio signal.

When an occupant activates a voice recognition system, such as in a vehicle, a microphone system associated with the voice recognition system acquires and transmits an audio signal to the voice recognition application. A camera system associated with the voice recognition system transmits a video signal of an occupant to the facial recognition application, which can include a trained facial classification model. The trained facial classification model determines if the occupant is speaking. If the facial classification model determines that the occupant is speaking, the audio signal is processed by the trained vocal ML model to annotate the audio signal with timestamps indicating human speech. The voice of the occupant can be isolated from the audio signal to create a speech-isolated audio signal. The speech-isolated audio signal can then be used as input into speech-controlled systems, such as virtual personal assistants, speech-to-text applications, and/or the like.

At least one technical advantage of the disclosed techniques relative to the prior art is that, with the disclosed techniques, a Virtual Personal Assistant (VPA) can isolate speech of a particular occupant and process the commands of said occupant with improved accuracy. In particular, the disclosed techniques combine a facial classification machine learning model and a vocal recognition model to isolate the speech of the occupant of a vehicle. By incorporating the isolated the speech of the occupant, the VPA can more accurately respond to vocal commands in an audio signal.
1. In some embodiments, a computer-implemented method comprises receiving an audio signal from a microphone system associated with a vehicle, receiving a video signal from a camera system associated with the vehicle, identify a facial classification model for classifying one or more facial makers in the video signal, determining that an occupant of the vehicle is speaking using the facial classification model, and generating an isolated audio signal corresponding to a speech signal in the audio signal using the facial classification model.
2. The method of clause 1, wherein determining that the occupant of the vehicle is speaking using the facial classification model comprises determining, using the facial classification model, that a face of the occupant is present in the video signal and that movement of the face indicates that the occupant is speaking.
3. The method of clauses 1 or 2, further comprising training the facial classification model based on one or more videos of the occupant captured during a model training phase.
4. The method of any of clauses 1-3, further comprising generating a facial map of the occupant during the model training phase, wherein the facial classification model specifies one or more facial features of the occupant while speaking.
5. The method of any of clauses 1-4, wherein the one or more facial features comprise a cheek bone height, a jaw position, or a lip position.
6. The method of any of clauses 1-5, further comprising identifying a vocal classification model for classifying one or more speech signals in the audio signal, wherein determining that the occupant of the vehicle is speaking is further based on the vocal classification model.
7. The method of any of clauses 1-6, wherein determining that the occupant of the vehicle is speaking using the facial classification model and the vocal classification model comprises annotating the audio signal with one or more timestamps indicating when the occupant is speaking in the audio signal.
8. The method of any of clauses 1-7, wherein annotating the audio signal with the one or more timestamps comprises identifying, using the facial classification model, the one or more timestamps by determining when the occupant is speaking based on the video signal.
9. The method of any of clauses 1-8, wherein the isolated audio signal comprises the annotated audio signal.
10. The method of any of clauses 1-9, further comprising training the vocal classification model based on one or more speech recordings of the occupant captured during a model training phase.
11. The method of any of clauses 1-10, wherein identifying the vocal classification model comprises identifying an occupant-specific vocal classification model.
12. The method of any of clauses 1-11, wherein the facial classification model comprises an occupant-specific facial classification model.
13. In some embodiments, one or more non-transitory computer-readable media store instructions that, that, when executed by one or more processors, cause the one or more processors to perform the steps of receiving an audio signal from a microphone system associated with a vehicle, receiving a video signal from a camera system associated with the vehicle, identify a facial classification model for classifying one or more facial makers in the video signal, determining that an occupant of the vehicle is speaking using the facial classification model, and generating an isolated audio signal corresponding to a speech signal in the audio signal using the facial classification model.
14. The one or more non-transitory computer-readable media of clause 13, wherein determining that the occupant of the vehicle is speaking using the facial classification model comprises determining, using the facial classification model, that a face of the occupant is present in the video signal and that movement of the face indicates that the occupant is speaking.
15. The one or more non-transitory computer-readable media of clauses 13 or 14, the steps further comprising identifying a vocal classification model for classifying one or more speech signals in the audio signal, wherein determining that the occupant of the vehicle is speaking is further based on the vocal classification model.
16. The one or more non-transitory computer-readable media of any of clauses 13-15, wherein determining that the occupant of the vehicle is speaking using the facial classification model and the vocal classification model comprises annotating the audio signal with one or more timestamps indicating when the occupant is speaking in the audio signal.
17. The one or more non-transitory computer-readable media of any of clauses 13-16, wherein annotating the audio signal with the one or more timestamps comprises identifying, using the facial classification model, the one or more timestamps by determining when the occupant is speaking based on the video signal.
18. The one or more non-transitory computer-readable media of any of clauses 13-17, wherein the isolated audio signal comprises the annotated audio signal.
19. The one or more non-transitory computer-readable media of any of clauses 13-18, wherein identifying the vocal classification model comprises identifying an occupant-specific vocal classification model.
20. In some embodiments, a system comprises a memory storing an application, and a processor coupled to the memory that executes the application that, when executed, causes the processor to at least receiving an audio signal from a microphone system associated with a vehicle, receiving a video signal from a camera system associated with the vehicle, identify a facial classification model for classifying one or more facial makers in the video signal, determining that an occupant of the vehicle is speaking using the facial classification model, and generating an isolated audio signal corresponding to a speech signal in the audio signal using the facial classification model.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method comprising:
receiving an audio signal from a microphone system associated with a vehicle;
receiving a video signal from a camera system associated with the vehicle;
identify a facial classification model for classifying one or more facial makers in the video signal;
determining that an occupant of the vehicle is speaking using the facial classification model; and
generating an isolated audio signal corresponding to a speech signal in the audio signal using the facial classification model.

2. The method of claim 1, wherein determining that the occupant of the vehicle is speaking using the facial classification model comprises determining, using the facial classification model, that a face of the occupant is present in the video signal and that movement of the face indicates that the occupant is speaking.

3. The method of claim 1 or 2, further comprising training the facial classification model based on one or more videos of the occupant captured during a model training phase.

4. The method of claim 3, further comprising generating a facial map of the occupant during the model training phase, wherein the facial classification model specifies one or more facial features of the occupant while speaking.

5. The method of claim 4, wherein the one or more facial features comprise a cheek bone height, a jaw position, or a lip position.

6. The method of any preceding claim, further comprising identifying a vocal classification model for classifying one or more speech signals in the audio signal, wherein determining that the occupant of the vehicle is speaking is further based on the vocal classification model.

7. The method of claim 6, wherein determining that the occupant of the vehicle is speaking using the facial classification model and the vocal classification model comprises annotating the audio signal with one or more timestamps indicating when the occupant is speaking in the audio signal.

8. The method of claim 7, wherein annotating the audio signal with the one or more timestamps comprises identifying, using the facial classification model, the one or more timestamps by determining when the occupant is speaking based on the video signal.

9. The method of claim 7 or 8, wherein the isolated audio signal comprises the annotated audio signal.

10. The method of any of claims 6 to 9, further comprising training the vocal classification model based on one or more speech recordings of the occupant captured during a model training phase.

11. The method of any of claims 6 to 10, wherein identifying the vocal classification model comprises identifying an occupant-specific vocal classification model.

12. The method of any preceding claim, wherein the facial classification model comprises an occupant-specific facial classification model.

13. One or more non-transitory computer-readable media storing instructions that, that, when executed by one or more processors, cause the one or more processors to perform the method of any preceding claim.

14. A system comprising:
a memory storing an application; and
a processor coupled to the memory that executes the application that, when executed, causes the processor to at least:
receiving an audio signal from a microphone system associated with a vehicle;
receiving a video signal from a camera system associated with the vehicle;
identify a facial classification model for classifying one or more facial makers in the video signal;
determining that an occupant of the vehicle is speaking using the facial classification model; and
generating an isolated audio signal corresponding to a speech signal in the audio signal using the facial classification model.
